(19) Europäisches Patentamt
European Patent Office
Office européen des brevets

(11) **EP 4 528 254 A1**

(12) **EUROPEAN PATENT APPLICATION**

(43) Date of publication:
**26.03.2025 Bulletin 2025/13**

(21) Application number: **24180153.9**

(22) Date of filing: **05.06.2024**

(51) International Patent Classification (IPC):
**G01N 21/88** $^{(2006.01)}$

(52) Cooperative Patent Classification (CPC):
**G01N 21/8806; G01N 21/8901**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151586**

(71) Applicants:
• **Kabushiki Kaisha Toshiba**
**Tokyo 105-0023 (JP)**
• **Toshiba Information Systems (Japan) Corporation**
**Kawasaki-shi, Kanagawa 210-8540 (JP)**

(72) Inventors:
• **Ohno, Hiroshi**
**Minato-ku, Tokyo, 105-0023 (JP)**
• **Kano, Hiroya**
**Minato-ku, Tokyo, 105-0023 (JP)**
• **Ohno, Akifumi**
**Kawasaki-shi, Kanagawa, 210-8540 (JP)**
• **Kawasaki, Akio**
**Kawasaki-shi, Kanagawa, 210-8540 (JP)**
• **Suzuki, Sayuri**
**Kawasaki-shi, Kanagawa, 210-8540 (JP)**
• **Takagi, Toshiaki**
**Kawasaki-shi, Kanagawa, 210-8540 (JP)**

(74) Representative: **Hoffmann Eitle**
**Patent- und Rechtsanwälte PartmbB**
**Arabellastraße 30**
**81925 München (DE)**

(54) **OPTICAL APPARATUS, OPTICAL INSPECTION SYSTEM, AND METHOD FOR IMAGING OBJECT**

(57) According to one example, an optical apparatus includes at least two light sources, illumination opening portions, and an imaging portion. The illumination opening portions are configured to partially block light emitted from the at least two light sources, respectively, to form illumination light. The imaging portion is configured to image an object using the illumination light. The at least two light sources are disposed at positions facing each other with an optical axis of the imaging portion interposed between the at least two light sources. The illumination light from the at least two light sources is formed to spread like a fan shape toward the object respectively by the illumination opening portions. The fan shape is defined on a reference plane including the optical axis of the imaging portion and on another plane parallel to the reference plane.

FIG. 1

EP 4 528 254 A1

**Description**

FIELD

The present disclosure relates to an optical apparatus, an optical inspection system, and a method for imaging an object.

BACKGROUND

In various industries, acquisition of information on a surface of an object in a noncontact manner has become important. Conventional methods include a method in which an object is illuminated with, for example, a ring illumination, a dark-field image is acquired by an imaging portion, and information on a surface of the object is acquired.

BRIEF DESCRIPTION OF THE DRAWINGS

FIG. 1 is a schematic block diagram of an optical inspection system according to arrangements.
FIG. 2 is a schematic cross-sectional diagram showing an optical apparatus in an optical inspection system according to a first arrangement.
FIG. 3 is a schematic perspective diagram showing a first illumination opening portion of a first illuminating portion of the optical apparatus shown in FIG. 2 and an illumination light applied to an object through the first illumination opening portion.
FIG. 4 is a flowchart of an example of an optical inspection algorithm.
FIG. 5 is a flowchart of an example of an optical inspection process shown in FIG. 4.
FIG. 6 is a schematic cross-sectional diagram showing an optical apparatus in an optical inspection system according to a second arrangement.
FIG. 7 is a schematic cross-sectional diagram showing an optical apparatus in an optical inspection system according to a third arrangement.
FIG. 8 is a schematic cross-sectional diagram showing an optical apparatus in an optical inspection system according to a modification of the third arrangement.

DETAILED DESCRIPTION

Hereinafter, an optical inspection system 1 according to arrangements will be described with reference to the accompanying drawings. The drawings are schematic or conceptual, and the relationship between a thickness and a width in each part, a dimensional proportion between parts, etc. shown in the drawings are not identical to those in actual products. Even if some drawings show the same parts, the dimensions or proportions in one drawing may be different from those in another. In the specification and the drawings of the present application, an element that is the same as that shown or described previously is denoted by the same reference symbol previously used, and detailed descriptions are omitted where appropriate.

It is an object of one example to provide an optical apparatus capable of imaging a surface of an object (a flat surface or an inclined surface having an appropriate inclination), an optical inspection system configured to optically inspect an object using an image acquired by the optical apparatus, and a method for imaging an object that can image a surface of the object (a flat surface or an inclined surface having an appropriate inclination).

According to the one example, an optical apparatus includes at least two light sources; illumination opening portions; and an imaging portion. The illumination opening portions are configured to partially block light emitted from the at least two light sources, respectively, to form illumination light. The imaging portion is configured to image an object using the illumination light. The at least two light sources are disposed at positions facing each other with an optical axis of the imaging portion interposed between the at least two light sources. The illumination light from the at least two light sources is formed to spread like a fan shape toward the object respectively by the illumination opening portions. The fan shape is defined on a reference plane including the optical axis of the imaging portion and on another plane parallel to the reference plane.

(First Arrangement)

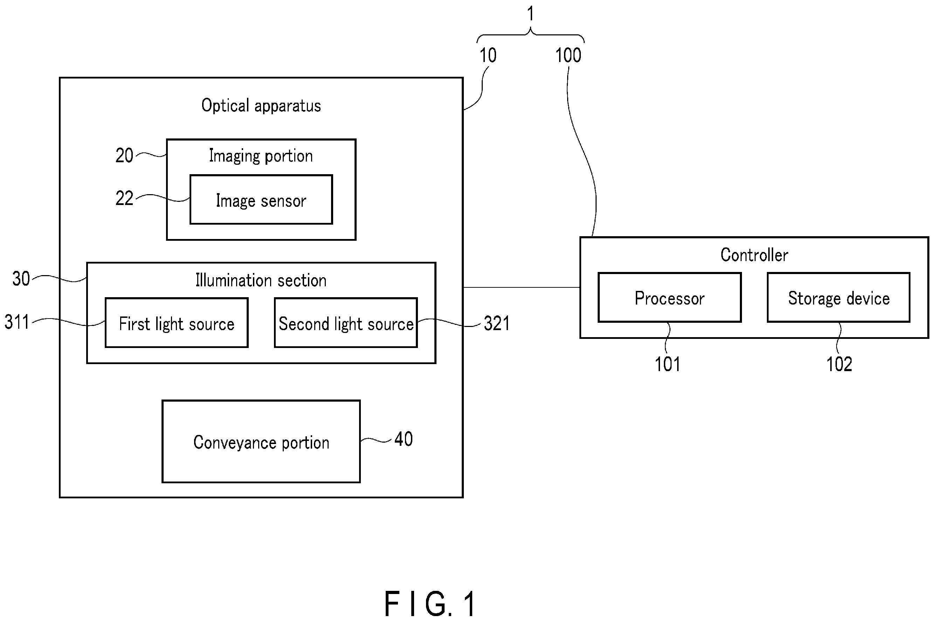

An optical inspection system 1 according to the arrangement will be described with reference to FIGS. 1 to 5.

In the specification, it is assumed that light is a kind of electromagnetic waves, and includes X rays, ultraviolet rays, visible light, infrared light, microwaves, and the like. In the present arrangement, it is assumed that the light is visible light having a wavelength in a region of, for example, 400 nm to 750 nm.

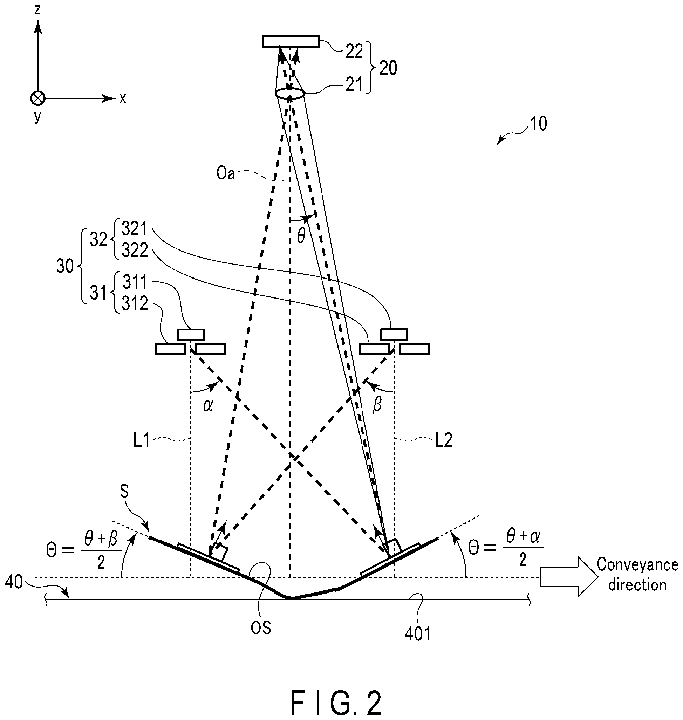

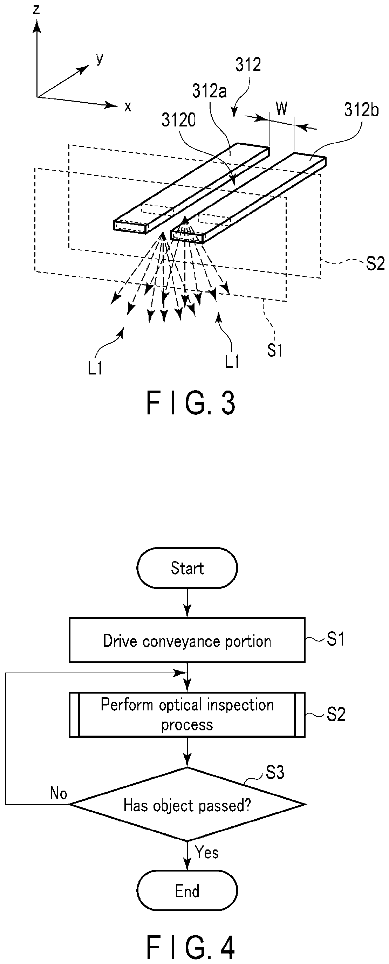

FIG. 1 is a schematic block diagram of the optical inspection system 1 according to the present arrangement. FIG. 2 is a schematic cross-sectional diagram showing an optical apparatus (optical inspection apparatus) 10 in the optical inspection system 1 according to the arrangement. It is assumed that the cross-sectional diagram shown in FIG. 2 shows a z-x plane of an XYZ Cartesian coordinate system. The cross section shown in FIG. 2 may be referred to as a reference plane S1. FIG. 3 is a schematic perspective diagram showing a first illumination opening portion 312 of a first illuminating portion 31 of the optical apparatus 10 shown in FIG. 2 and an illumination light L1 applied to an object through the first illumination opening portion 312.

As shown in FIG. 1, the optical inspection system 1 of the arrangement includes the optical apparatus 10 and a controller 100.

As shown in FIGS. 1 and 2, the optical apparatus 10 of the arrangement includes an imaging portion 20 and an illumination section 30. The illumination section 30 includes at least two independent illuminating portions. The two illuminating portions may function in an interlocked manner. In the present arrangement, the illumination section 30 includes the first illuminating portion 31 and a second illuminating portion 32. The optical apparatus 10 also includes a conveyance portion 40 that is configured to convey an object S, for example, in a predetermined direction. The predetermined direction in which the object S is conveyed is referred to as the conveyance direction. The conveyance direction may be any direction. In the present arrangement, the direction along an x-axis is assumed to be the conveyance direction. The conveyance portion 40 may convey the imaging portion 20; that is, the conveyance portion 40 may be any means as long as it can change a relative position of the imaging portion 20 and the object S. The conveyance by such means as mentioned above is collectively referred to as conveyance. In a case of conveying the imaging portion 20, the illumination section 30 is preferably conveyed in the same direction as in the conveyance of the imaging portion 20, while the positional relation between the illumination section 30 and the imaging portion 20 is maintained.

The imaging portion 20 includes an imaging optical element 21 and an image sensor 22.

The imaging optical element 21 is, for example, an imaging lens. The imaging lens is schematically depicted as one lens in FIG. 2, but may be an assembled lens including a plurality of lenses. Alternatively, the imaging optical element 21 may be a concave mirror, a convex mirror, or a combination thereof. That is, the imaging optical element 21 may be any optical element a long as it has a function of collecting light beams emitted from a point of an object, namely, an object point, to an imaging point conjugate to the object point. Collecting (converging) light beams emitted from an object point to an imaging point on a surface of the object S by the imaging optical element 21 is referred to as imaging. Alternatively, it is referred to as transferring an object point to an imaging point (a conjugate point of the object point). A plane on which conjugate points obtained by transferring light beams emitted from a sufficiently far object point by means of the imaging optical element 21 is called a focal plane of the imaging optical element 21. A line that is perpendicular to the focal plane and that passes through the center of the imaging optical element 21 is referred to as an optical axis Oa. An imaging point that is a conjugate point of the object point transferred by the light beam is called a focal point. In this arrangement, the imaging optical element 21 may be called simply the lens.

In the cross section shown in FIG. 2, it is assumed that the optical axis Oa coincides with the z-axis. This cross-sectional diagram includes the z-axis, namely, the optical axis Oa.

The image sensor 22 has one or more pixels, and each pixel is configured to receive light beams of at least two different wavelengths, namely, a light beam of a first wavelength and a light beam of a second wavelength. A plane including the image sensor 22 is referred to as an imaging plane of the imaging optical element 21. The image sensor 22 may be an area sensor or may be a line sensor. The area sensor includes pixels arrayed in an area on one plane. The line sensor includes pixels arrayed in a line. The pixels may have three color channels of R, G, and B, respectively. In other words, the image sensor 22 may be configured to receive light in independent color channels. However, the color channels need not be completely independent; substantially, the different color channels may be slightly sensitive for the same wavelength.

Preferably, the two illuminating portions of the illumination section 30 are located at positions facing each other with the imaging optical axis Oa of the imaging portion 20 interposed between the two illuminating portions. More preferably, the two illuminating portions of the illumination section 30 are located at positions mirror-symmetrical to each other with respect to the imaging optical axis Oa of the imaging portion 20. The illumination section 30 includes, for example, two light sources 311 and 321, and two illumination opening portions 312 and 322. Specifically, the first illuminating portion 31 includes the first light source 311 and the first illumination opening portion 312, and the second illuminating portion 32 includes the second light source 321 and the second illumination opening portion 322. A light flux emitted from the first illuminating portion 31 is referred to as first illumination light L1, and a light flux emitted from the second illuminating portion 32 is referred to as second illumination light L2.

The first light source 311 and the second light source 321 are both assumed to emit white light. However, the illumination light is not limited to white light, but the first light source 311 and the second light source 321 may emit any type of light. In the present arrangement, it is assumed that the wavelength spectrum of white light has a significant intensity distribution at a wavelength of 400 nm to 750 nm. Therefore, each of the first light source 311 and the second light source 321 emits light of at least two different wavelengths. Each illuminating portion may have a single light source 311 or 321, or a plurality of light sources 311 or 321.

Some of the light beams emitted from the first light source 311 are blocked by the first illumination opening portion 312. Some of the light beams emitted from the second light source 321 are blocked by the second illumination opening portion 322. The illumination lights L1 and L2 of the optical apparatus 10 are formed of the light beams passed through the first illumination opening portion 312 and the second illumination opening portion 322. Thus, the illumination section 30 forms desired illumination lights L1 and L2 by blocking some of the light beams emitted from the two light sources 311 and 321.

FIG. 3 is a perspective diagram of the first illumination opening portion 312 of the first illuminating portion 31. As shown in FIG. 3, the first illumination opening portion 312 has the same size and the same shape on at least two mutually parallel flat planes (cross sections) S1 and S2 which are parallel to, for example, the z-x plane. On the planes S1 and S2, an opening width W is assumed to be sufficiently smaller than a width of a field of view imaged by the image sensor 22 of the imaging portion 20. With the configuration described above, substantially fan-shaped light beams are formed as first illumination light L1 by the illumination opening portion 312 in an optical system of this optical apparatus 10. The fan-shaped light beams mean light beams radiating to spread radially (in a fan shape) from the light source. In this arrangement, the fan-shaped light beams are generated from the light source 311, which can be regarded substantially as a point, or the illumination opening portion 312, which is a secondary light source and can be regarded substantially as a point. In this arrangement, it is assumed that the illumination opening portion 312 has a slit 3120. That is, the slit 3120 of the first illumination opening portion 312 has the same opening widths (gaps) W on the cross section S1 (the reference plane parallel to the z-x plane) and on the plane S2 parallel to the cross section S1 (the reference plane) shown in FIG. 2. In other words, the size and the shape of the first illumination opening portion 312 is the same on the reference plane S1 including the optical axis Oa of the imaging portion 20 and another plane S2 parallel to the reference plane. In this arrangement, the first illumination light L1 emitted from the light source 311 which is regarded substantially as a point and which is passed through the slit 3120 of the first illumination opening portion 312 along the y-axis propagates along a z-x plane (parallel to the z-x plane) and forms a light beam group spreading like a fan shape (substantially in a fan shape) toward a conveyance surface 401 of the conveyance portion 40.

The other plane S2 parallel to the reference plane S1 is not only one plane, but is preferably considered a plane group having at least a width of the object S or a width substantially the same as a width of the conveyance surface 401 for the object S. Thus, the illumination light L1 radiates along the z-x plane from point light sources that can be regarded as a linear light source which is a group of the point light sources and which has a length equivalent to at least the width of the object S or the width of the conveyance surface 401 for the object S. Therefore, if the object S has an appropriate width along a y-axis direction, the first illuminating portion 31 preferably emits illumination light from a plurality of light sources 311 arrayed in the y-axis direction.

The first light sources 311 preferably illuminate the conveyance surface 401 at an almost constant illumination intensity on the conveyance surface 401 along the y-axis direction in an illuminated region of the conveyance surface 401.

The slit 3120 of the first illumination opening portion 312 having the width W is formed between, for example, a pair of light blocking surfaces 312a and 312b extending in the y-axis direction on a plane, for example, parallel to an x-y plane. The light blocking surfaces 312a and 312b are provided outside the field of view of the imaging portion 20. Therefore, the field of view of the imaging portion 20 is not interfered with by the first illumination opening portion 312 but is appropriately secured. The second illuminating portion 32 is mirror symmetric to the first illuminating portion 31 about the optical axis Oa of the optical apparatus 10, and descriptions of the second illuminating portion 32 are omitted.

The illumination lights L1 and L2 which are emitted from the light sources regarded as point light sources and which are spread like a fan shape by the illumination opening portions 312 and 322, respectively, toward the object S are formed on each of the cross section (the reference plane parallel to the z-x plane and including a conveyance direction of the conveyance portion 40) S1 and the other plane S2 parallel to the cross section (reference plane) S1 shown in FIG. 2.

A directional distribution of light reflected from an object point on the surface (object surface) OS of the object S can be represented by a distribution function called a bidirectional reflectance distribution function (BRDF). The BRDF generally varies depending on the surface condition (surface texture and surface shape) of the object surface OS. For example, if the surface is coarse, the reflected light spreads in various direction; therefore, the BRDF indicates a wide distribution. In other words, the reflected light is present in a wide angle. In contrast, if the surface is a mirror surface, the reflected light has almost regular reflection components only; therefore, the BRDF indicates a narrow distribution. Thus, the BRDF reflects the surface condition of the object surface. In particular, the BRDF generally varies widely by small concavities and convexities of a size 10 times the wavelength of the light or smaller.

As shown in FIGS. 1 and 2, the conveyance portion 40 conveys in a predetermined direction the object S placed on the conveyance surface 401 which is parallel to, for example, the x-y plane. In this arrangement, the direction of conveyance is along the x-axis. The conveyance surface 401 of the conveyance portion 40 is formed of, for example, a belt of a belt conveyor. The conveyance portion 40 may be constituted by a device actuated by a linear actuator, a stepping motor, or the like. That is, the conveyance portion 40 may be any device that can convey the object S. The direction of conveyance of the conveyance portion 40 is along the reference plane S1 (see FIG. 3) of the illumination lights L1 and L2 respectively emitted from the two light sources 311 and 321. In other words, the direction of conveyance of the conveyance portion 40 is along and parallel to the reference plane S1.

As shown in FIG. 1, the optical apparatus 10 is connected to the controller 100. The controller 100 controls at least one of the image sensor 22 of the imaging portion 20, the two light sources 311 and 321 of the illumination section 30, or the conveyance portion 40. In this arrangement, the controller 100 is configured to control the image sensor 22 of the imaging portion 20, the two light sources 311 and 321 of the illumination section 30, and the conveyance portion 40. The controller 100 is connected to the imaging portion 20, the two illuminating portions of the illumination section 30, and the conveyance portion 40 in a wired or wireless manner. If the controller 100 is wirelessly connected to the imaging portion 20, the illumination section 30 including the two light sources 311 and 321, and the conveyance portion 40, the controller 100 may be located near or remote from the imaging portion 20, the illumination section 30, and the conveyance portion 40.

The controller 100 includes a processor 101 for acquiring an image imaged by the imaging portion 20 and calculating a BRDF of each object point from the acquired image, and a storage device 102 for storing an image, or the like. Thus, the controller 100 can acquire detailed information on each object point from the BRDF. In other words, the controller 100 acquires information on the object S based on the image imaged by the imaging portion 20. The controller 100 which acquires detailed information on each object point based on the image acquired by the imaging portion 20 may be a controller different from the controller that controls the two illuminating portions of the illumination section 30 and the conveyance portion 40.

The processor 101 is, for example, a CPU or a GPU; however, it may be any element that can carry out an operation (an inspection process for the object surface OS shown in FIG. 2) described later.

The processor 101 corresponds to a central portion of a computer that performs processing such as an operation, control, and the like necessary for the process of the controller 100, and controls the entire controller 100 in an integrative manner. The processor 101 executes control to realize various functions of the controller 100 based on a program such as system software, application software, firmware, or the like stored in the storage device 102, such as a ROM, an auxiliary storage device, or the like. The processor 101 includes, for example, a central processing unit (CPU), a micro processing unit (MPU), a digital signal processor (DSP), an application specific integrated circuit (ASIC), a field programmable gate array (FPGA), a graphics processing unit (GPU), or the like. Alternatively, the processor 101 is a combination of two or more of these. One or more processors 101 may be provided in the controller 100.

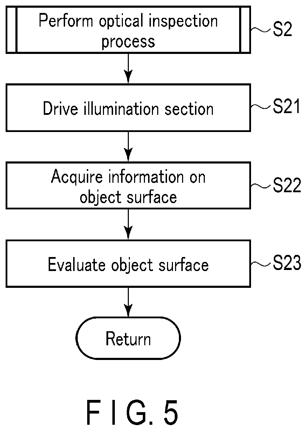

The controller 100 carries out processing to realize various functions by causing the processor 101 to execute the program or the like stored in the storage device 102. A control program of the controller 100 may not be stored in the storage device 102 of the controller 100, but may preferably be stored in an appropriate server or a cloud system. In this case, the control program is executed while the server or the cloud system is communicating with, for example, the processor 101 of the optical inspection system 1 via a communication interface. The controller 100 of the present arrangement may be disposed near the imaging portion 20, the illumination section 30, and the conveyance portion 40 of the optical apparatus 10, or in a server or a cloud system of systems in various inspection fields remote from the imaging portion 20, the illumination section 30, and the conveyance portion 40. Therefore, an optical inspection program may not be stored in the storage device 102, but may preferably be stored in a server or a cloud system, and the program may be executed while the server or the cloud system is communicating with, for example, the processor 101 of the optical inspection system 1 via a communication interface. Thus, the processor 101 (the controller 100) can execute an optical inspection program (an optical inspection algorithm) described later (see FIGS. 4 and 5).

The processor 101 (the controller 100) can control a conveyance speed along the direction of conveyance of the object surface OS by the conveyance portion 40, illumination timings of the light sources 311 and 321 in the illumination section 30, a frame rate, acquisition of image data from the image sensor 22 in the imaging portion 20, or the like, and can perform appropriate image processing on the acquired image.

The storage device 102 is, for example, an HDD or an SSD, but may be any device that can store (save), for example, an image.

In the present arrangement, it is assumed that the object S is opaque, and reflects the light at the object surface OS. In this case, the imaging optical axis Oa of the imaging portion 20 is disposed, for example, right above the conveyance surface 401 and perpendicular to the conveyance surface 401. The first illuminating portion 31 and the second illuminating portion 32 are also disposed right above the conveyance surface 401. The longitudinal direction of the slit 3120 of the first illumination opening portion 312 and the slit of the second illumination opening portion 322 coincides with the y-axis direction of the conveyance surface 401.

However, the object S is not limited to an opaque object, but may be transparent or translucent. In this case, the imaging portion 20 is disposed on a side where the light emitted from the illumination section has passed through the object S.

Based on the configuration described above, an operating principle of the optical inspection system 1 according to the arrangement will be described.

The controller 100 causes the first light source 311 of the first illuminating portion 31 and the second light source 321 of the second illuminating portion 32 to emit light in the same period, so the fan-shaped light beams L1 and L2 (see FIGS. 2 and 3) are radiated toward the object surface of the object S via the illumination opening portions 312 and 322. At this time, the controller 100 causes the illumination lights L1 and L2 to be radiated from the light sources 311 and 321 toward the object S via the illumination opening portions 312 and 322 to spread like a fan shape on the reference plane S1 including the optical axis Oa and another plane S2 parallel to the reference plane S1. In this arrangement, the illumination lights L1 and L2 from the light sources 311 and 321 are radiated from the positions which are mirror symmetric with respect to the optical axis Oa of the imaging portion 20 to illuminate the object S.

In FIG. 2, the object surface OS is assumed to be a mirror surface. In this case, at all points on the object surface OS, the reflected light is a regular reflection, and the BRDF of the reflected light has only specular components in a narrow distribution.

Assuming that the x-y plane (the conveyance surface 401) is a first criterion plane, the object surface OS has various inclinations relative to the first criterion plane. In a z-x cross section in FIG. 2, it is assumed that an inclination of the object surface OS from the x-axis is defined as $\Theta$, and a counterclockwise direction is defined as a positive direction. The inclination $\Theta$ is called an inclination angle of the object surface OS. In the following, it is assumed that the angle on a plane (including the inclination angle $\Theta$) is specified on the assumption that the counterclockwise direction is a positive direction, unless otherwise specified. However, the clockwise direction may be defined as a positive direction; that is, whichever direction may be determined as positive or negative when an angle is referred to. If an angle is not particularly referred to as positive or negative, the positive direction of the angle may be considered to be either clockwise or counterclockwise. The definition of positive or negative direction should not be changed angle by angle on the same plane; either the clockwise or counterclockwise direction must be defined consistently as positive. The angle in the plane is specified to range from -90 to +90 degrees. That is, the angle is specified as 90 degrees at the maximum and -90 degrees at the minimum.

Regarding the illumination light from the illumination section 30, the light flux emitted from the first light source 311 and passed through the illumination opening portion 312 (the first illumination light L1) is considered. On the reference plane S1, an angle formed by the light beam in the light flux and the z-axis is defined as $\alpha$. That is, the angle formed by the first illumination light L1 and the optical axis Oa is defined as $\alpha$. Similarly, the light flux emitted from the second light source 321 and passed through the illumination opening portion 322 (the second illumination light L2) is considered. On the reference plane S1, an angle formed by the light beam in the light flux and the z-axis is defined as $\beta$. That is, the angle formed by the second illumination light L2 and the optical axis Oa is defined as $\beta$.

When the illumination light emitted from the illumination section 30 is reflected or passed through at an object point in the object S, the imaging portion 20 images the light from the object S on the image sensor 22. As a result, the controller 100 acquires an image of the object S by means of the imaging portion 20 (the image sensor 22). That is, the imaging portion 20 images the object S and acquires an image of the surface of the object S. Particularly, in a case where the object is opaque, since the illumination lights L1 and L2 are reflected by the object surface, the image on the object surface of the object is acquired (imaged).

The imaging portion 20 focuses a light flux having an intensity distribution at the object point indicated by the BRDF on an imaging point on the image sensor 22 to obtain an image. A light beam along a straight line passing through both the object point and the imaging point is referred to as a main light beam. On the reference plane S1, an angle formed by the main light beam and the z-axis is defined as $\theta$. That is, the angle formed by the main light beam and the optical axis Oa is defined as $\theta$.

In a case where the object surface OS is a mirror surface and the reflection of the first illumination light L1 (incident light) at the object surface OS is regular reflection, the inclination angle $\Theta$ of the object that can be imaged by the first illumination light L1 (the imageable inclination angle) on the reference plane S1 is represented by the following equation:

$$\Theta = (\theta + \alpha)/2 \quad (1).$$

From this equation (1), it is understood that the greater the absolute value of the incident angle $\alpha$ of the first illumination light L1, the greater the absolute value of the imageable inclination angle $\Theta$. Similarly, in a case where the reflection of the second illumination light L2 (incident light) at the object surface OS is regular reflection, the inclination angle $\Theta$ of the object that can be imaged by the second illumination light L2 on the reference plane S1 is represented by the following formula:

$$\Theta = (\theta + \beta)/2 \quad (2).$$

From this formula (2), it is understood that the greater the absolute value of the incident angle $\beta$ of the second illumination light L2, the greater the absolute value of the imageable inclination angle $\Theta$.

On the cross-sectional diagram (the reference plane S1) of FIG. 2, a maximum value of the incident angles of the illumination lights L1 and L2 is a value of the incident angle of the first illumination light L1, and is defined as $\alpha$max. A minimum value of the incident angle of the first illumination light L1 is defined as $\alpha$min. A minimum value of the incident angles of the illumination lights L1 and L2 is a value of the incident angle of the second illumination light L2, and is defined as $\beta$min. A maximum value of the incident angle of the second illumination light L2 is defined as $\beta$max. In this case,

the range of the imageable inclination angle Θ is represented by the following formula.

$$\beta_{min}/2 \leq \Theta - \theta/2 \leq \alpha_{max}/2 \quad (3)$$

That is, the range of the inclination angle Θ (the maximum range of the angle) is $\alpha_{max}/2 - \beta_{min}/2$. This is greater than the range obtained by only formula (1) or the formula (2). Thus, the range of the imageable inclination angle Θ that can be imaged only by the first illumination light L1 is $\alpha_{max}/2 - \alpha_{min}/2$. The range of the imageable inclination angle Θ that can be imaged only by the second illumination light L2 is $\beta_{max}/2 - \beta_{min}/2$. On the other hand, the range of the imageable inclination angle Θ that can be imaged by using both the first illumination light L1 and the second illumination light L2 is $\alpha_{max}/2 - \beta_{min} 2$ as expressed by the formula (3), and is therefore greater than that in the case of using only one of the illumination lights. Thus, the range of the imageable inclination angle Θ that can be imaged by using both the first illumination light L1 and the second illumination light L2 is greater than the range of the imageable angle Θ that can be imaged by using only the first illumination light L1 and greater than the range of the imageable angle Θ that can be imaged by using only the second illumination light L2.

If the optical apparatus 10 according to the arrangement includes only one illumination light, for example, only the first illumination light L1, the range of the imageable angle Θ is smaller than the imageable range realized by using the two illumination lights L1 and L2 (the range of the formula (3)). Thus, with the configuration in which at least two illuminating portions 31 and 32 (the illumination lights L1 and L2) are provided at opposing positions with the optical axis Oa interposed between the at least two illuminating portions 31 and 32, the optical apparatus 10 of the arrangement is advantageous in that the range of the inclination angle at which the imaging portion 20 can acquire an image is increased as compared to a configuration provided with only one illumination light.

The controller 100 connected to the optical apparatus 10 according to the arrangement is operated in accordance with, for example, an optical inspection program (optical inspection algorithm) shown in FIGS. 4 and 5.

First, as shown in FIG. 4, the controller 100 controls the conveyance portion 40 to convey the conveyance surface 401, for example, at a predetermined speed in a predetermined conveyance direction (step S1). At this time, preferably, the conveyance surface 401 of the conveyance portion 40 is moved at a predetermined speed and the object S is continuously fed at the predetermined speed in the predetermined conveyance direction (an x-axis direction) until the end of the process.

Then, the controller 100 performs an optical inspection process on the object S conveyed on the conveyance surface 401 (step S2).

As shown in FIG. 5, in the optical inspection process, the controller 100 controls the first light source 311 and the second light source 321 of the illumination section 30, and radiates the first illumination light L1 and the second illumination light L2 onto the object surface OS of the object S (see FIG. 2) (step S21). However, the above operation does not necessarily need to be performed; it suffices that the first light source 311 and the second light source 321 of the illumination section 30 are continuously lighted. In other words, the illumination light may always be radiated onto the object surface OS. On the other hand, if the first light source 311 and the second light source 321 of the illumination section 30 are controlled, an advantage of suppressing the power consumption or the like can be obtained.

The controller 100 controls the image sensor 22 to obtain an image of the object surface OS, and acquires the obtained image (information on the object surface OS) (step S22).

Then, the controller 100 evaluates the object surface OS (step S23) based on the information on the object surface OS (the image) acquired in step S22. The evaluation of the object surface OS can be performed by various image processing techniques.

As shown in FIG. 4, the controller 100 determines whether the object S has passed the field of view of the imaging portion 20 (step S3). If the object S has passed the field of view of the imaging portion 20 (step S3-Yes), the optical inspection process for the object S is ended.

If the object S has not passed the field of view of the imaging portion 20 (step S3-No), the optical inspection process for the object S is carried out again. In this case, an imaginary intersection of the object S and the optical axis Oa is different from an intersection of the object S and the optical axis Oa in the optical inspection process previously performed. For example, the intersection of the object S and the optical axis Oa is varied with time; it moves to a more downstream side with respect to the object S on the conveyance surface 401.

In the optical inspection process shown in FIG. 5, even if evaluation of the object surface for an acquired image has not been completed, the object S may be continuously conveyed by the conveyance surface 401 of the conveyance portion 40. During the conveyance, the intersection of the object S and the optical axis Oa of the imaging portion 20 is varied. That is, in the optical inspection process, the controller 100 may simultaneously execute evaluation at different positions of the object surface of the same object S. For example, in the optical inspection process for an object S that is longer than the field of view of the imaging portion 20 in the conveyance direction, the overall surface of the object S is imaged at least once in a plurality of steps of an imaging process, and thereafter, whether a plurality of images acquired in the imaging process are appropriate or not is evaluated.

Regardless of whether there is one object S or a plurality of objects S, the controller 100 preferably stops the conveyance of the conveyance portion 40 at an appropriate timing after all inspection targets have passed the field of view of the imaging portion 20.

Illumination light generated by a conventional ring illumination is now considered. In a cross section including an axis of symmetry of the ring illumination, a range of an imageable inclination angle is referred to as a criterion range. In this case, the range of an inclination angle is necessarily smaller than the criterion range in any plane that is parallel to a cross section (the z-x plane where y = 0 in FIG. 2; a second criterion plane) including the axis of symmetry of the ring illumination and that is different from the cross section (the z-x plane where y ≠ 0). This matter can be derived based on geometrical optics. Specifically, the ring illumination is arranged annularly about the z-axis serving as a center of the circle. An inclination angle range on the z-x plane where y = 0 in FIG. 2 is the greatest: as y becomes greater or smaller than 0, the inclination angle on a cross section parallel to the z-x plane becomes smaller, and finally the inclination angle ranges become 0. In a cross section including the imaging optical axis Oa of the optical apparatus 10 of the arrangement (second criterion plane), a range of an imageable inclination angle is referred to as a criterion range. The range of an inclination angle on at least one plane that is parallel to the cross section (second criterion plane) including the imaging optical axis Oa of the optical apparatus 10 and that is different from the cross section (the z-x plane where y ≠ 0) is the same as the criterion range of the second criterion plane. This is because, on the reference plane S1 (FIG. 3) and another plane S2 (FIG. 3) parallel to the reference plane S1, the illumination light L1 emitted from the light sources regarded as point light sources is formed to spread like fans of an equal size and an equal shape toward the object S, and the illumination light L2 is formed, on the opposed side from the illumination light L1 with the imaging optical axis Oa interposed between the illumination lights L1 and L2, to spread like fans of an equal size and an equal shape toward the object S. Thus, as compared to the ring illumination, the optical apparatus 10 of the arrangement is advantageous in that the range of the imageable inclination angle is constant on a plane parallel to and different from the second criterion plane (the z-x plane where y ≠ 0). In addition, as compared to the ring illumination, the optical apparatus 10 of the arrangement is advantageous in that the range of the imageable inclination angle on at least two parallel planes (the z-x plane where y ≠ 0) can be as large as that on the second criterion plane.

In the cross section of FIG. 2, the first illumination light L1 and the second illumination light L2 are fan-shaped light beams having various incident directions. That is, all incident light beams of the illumination lights L1 and L2 of irradiation angles from βmin to amax can be radiated onto the object S. Therefore, all incident light beams of irradiation angles from βmin to amax can be incident on desired object points to obtain an image of the object surface OS by continuously acquiring images by the imaging portion 20 while the object S is gradually moved in the conveyance direction. Thus, the arrangement is advantageous in that incident light in various directions is radiated onto desired object points, and the object surface OS can be imaged each time the light is incident. As a result, even if the object surface OS has inclinations and reflected light is directed in various directions, it is possible to radiate light in incident directions that allow reflections in directions toward the imaging portion 20. That is, even if the object surface OS of the object S has various inclinations, illumination light in appropriate directions can be radiated to obtain an image by the imaging portion 20.

The BRDF at the object point in the object S varies depending on the incident angle of the illumination light. Details of the condition at the object point can be acknowledged by obtaining the dependency of the BRDF on the incident angle of the illumination light. Since the optical apparatus 10 of the arrangement can obtain BRDFs for various incident angles, it is advantageous in that detailed information on the object point can be acquired.

As an example of the optical apparatus 10 of the optical inspection system 1 according to the arrangement, the distance between the object S and the image sensor 22 is, for example, about 500 mm, although it varies depending on the selection of the imaging optical element (imaging lens) 21. The range of the field of view of the optical apparatus 10 is, for example, about 200 mm, although it varies depending on the selection of the imaging optical element (imaging lens) 21, the width of the image sensor 22, or the like.

In the case of using the optical apparatus 10 according to the present arrangement, disposing the light sources 311 and 321 at positions facing each other with optical axis Oa interposed between the light sources 311 and 321, and causing the fan-shaped light beams L1 and L2 to be incident in the field of view of the imaging portion 20, the range of the angle at which the reflected light from the object S in the field of view is incident in the image sensor 22 is increased to, for example, about ±30 degrees. Therefore, according to the optical apparatus 10 of the arrangement, an image of the object surface OS of a greater inclination angle can be obtained.

As an optical apparatus different from the optical apparatus 10 of the arrangement, a method is known in which, for example, white light is emitted from one light source in the direction of an optical axis Oa and an illumination light is formed by a half mirror intersecting the optical axis Oa or the like and incident in the field of view, thereby acquiring an image of an object surface. In a case where such a light is incident in the field of view, it may be difficult to image an object S of a large inclination angle due to a problem of the size, performance, location, etc. of the half mirror, and a space in which the optical apparatus as a whole is disposed. In such an optical apparatus, if the distance between the object S and the image sensor is, for example, about 500 mm and the field of view of the optical apparatus is, for example, about 200 mm, the range of the inclination angle at which the reflected light from the object S reaches the image sensor (that is, the range of the inclination angle at which the object S can be imaged) is assumed to be, for example, about $\pm$ 10 degrees.

In the optical apparatus 10 of the arrangement, the object surface OS can be irradiated with the illumination light emitted from the first illuminating portion 31 and the second illuminating portion 32 arranged outside the field of view and to face each other with the optical axis Oa of the imaging portion 20 interposed between the first illuminating portion 31 and the second illuminating portion 32. Therefore, a half mirror intersecting the optical axis Oa is unnecessary; accordingly, reflected light from an object surface OS including a flat surface, a curved surface, and an inclined surface is incident in the imaging portion 20 irrespective of spatial restriction, performance of a half mirror, and the like, so that an image of the object surface OS including the flat surface, the curved surface and the inclined surface can be obtained.

Thus, the optical apparatus 10 according to the arrangement described above can obtain an image of the surface of the object S including the curved surface and the inclined surface, which have an appropriate angle, in addition to the flat surface. Therefore, inspection of various surfaces, such as inspection as to whether the object surface OS is satisfactory or defective, or the like, can be easily performed by using the controller 100 of the optical inspection system 1.

The optical apparatus 10 of the arrangement includes the at least two light sources 311 and 321, the illumination opening portions 312 and 322 configured to form illumination lights L1 and L2 by blocking some of the light beams emitted from the at least two light sources 311 and 321, and the imaging portion 20 configured to image the object S. The at least two light sources 311 and 321 are disposed at positions facing each other with the optical axis Oa of the imaging portion 20 interposed between the at least two light sources 311 and 321. The illumination lights L1 and L2 respectively emitted from the at least two light sources 311 and 321 are formed to spread like a fan shape toward the object S via the illumination opening portions 312 and 322 on the reference plane S1 including the optical axis Oa of the imaging portion 20 and another plane S2 parallel to the reference plane S1. Then, the imaging portion 20 images the object S using the illumination lights L1 and L2.

A method for imaging an object according to the arrangement includes: radiating illumination lights L1 and L2 emitted from the at least two light sources 311 and 321 disposed at positions facing each other with the optical axis Oa of the imaging portion 20 interposed between the at least two light sources 311 and 321 to spread like a fan shape toward the object S from the at least two light sources 311 and 321 on the reference plane S1 including the optical axis Oa of the imaging portion 20 and another plane S2 parallel to the reference plane S1; and imaging the object S by the imaging portion 20 and acquiring an image of a surface of the object S.

As described above, the present arrangement provides the optical apparatus 10 configured to image an object surface OS (a flat surface and an inclined surface having an appropriate inclination), the optical inspection system 1 configured to optically inspect an object using the image acquired by the optical apparatus 10, and the method for imaging an object surface OS (a flat surface and an inclined surface having an appropriate inclination).

(Second Arrangement)

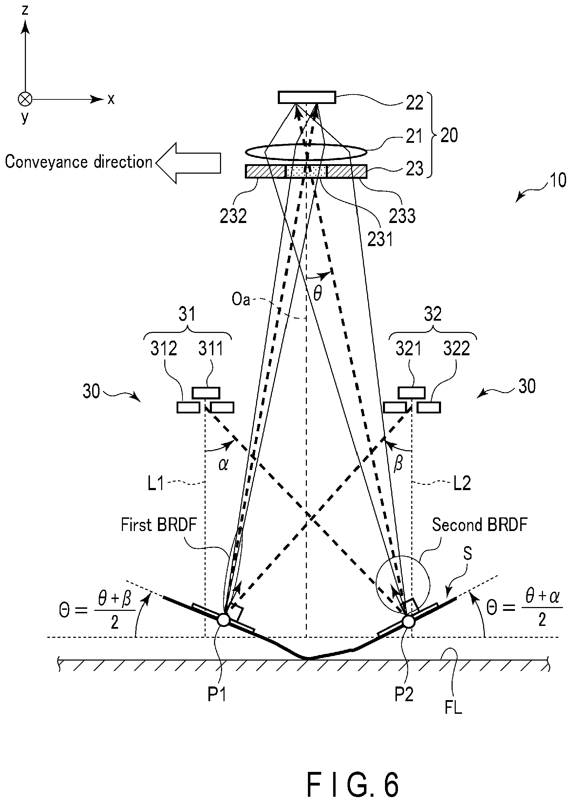

An optical apparatus (optical inspection device) 10 of an optical inspection system 1 according to a second arrangement will be described with reference to FIG. 6. The optical inspection system 1 of the second arrangement is a modification of the optical inspection system 1 of the first arrangement. The same members or members having the same functions as those described above for the first arrangement are denoted by the same reference numerals as much as possible, and detailed descriptions thereof will be omitted.

FIG. 6 is a schematic cross-sectional diagram showing the optical apparatus 10 in the optical inspection system 1 according to the present arrangement. It is assumed that the cross-sectional diagram shows a z-x plane.

The optical apparatus 10 of the present arrangement includes an imaging portion 20 including a wavelength selection portion 23, and an illumination section 30 including at least two light sources 311 and 321.

Since the illumination section 30 is similar to that of the illumination section 30 of the first arrangement, a description thereof is omitted here.

The optical apparatus 10 of this arrangement includes a conveyance portion 40 for conveying the imaging portion 20 and the illumination section 30 together, instead of conveying an object S. The conveyance direction of the imaging portion 20 and the illumination section 30 may be any direction. In this arrangement, a negative direction along the x-axis is assumed to be the conveyance direction. The conveyance portion 40 may convey the object S; that is, the conveyance portion 40 may be any means as long as it can change a relative position of the imaging portion 20 and the illumination section 30 with respect to the object S. The conveyance by such means as mentioned above is collectively referred to as conveyance.

In the present arrangement, it is assumed that the object S is placed on a placement surface FL which is, for example, a flat surface.

The image sensor 22 of the imaging portion 20 according to the present arrangement has one or more pixels, and each pixel is configured to receive light beams of at least two different wavelengths, namely, a light beam of a first wavelength and a light beam of a second wavelength. A plane including the image sensor 22 is referred to as an imaging plane of the imaging optical element 21. The image sensor 22 may be an area sensor or may be a line sensor. The area sensor includes pixels arrayed in an area on one plane. The line sensor includes pixels arrayed in a line. The pixels in the image sensor 22 may have three color channels of R, G, and B, respectively. In other words, the image sensor 22 may be configured to receive light in independent color channels. However, the color channels of the image sensor 22 need not be completely independent; substantially, the different color channels may be slightly sensitive to the same wavelengths. In this arrangement, the image sensor 22 has at least two channels of R and B. That is, the image sensor 22 can disperse red light (R) and blue light (B). In other words, the imaging portion 20 can disperse at least two components having different wavelengths.

Blue light is assumed to have a wavelength spectrum from 400 nm to 500 nm, and a peak wavelength is 450 nm. The first wavelength is assumed to be 450 nm of the peak wavelength of the blue light. Red light is assumed to have a wavelength spectrum from 580 nm to 700 nm, and a peak wavelength is 650 nm. The second wavelength is assumed to be 650 nm of the peak wavelength of the red light. However, the wavelength spectrum, the first wavelength, and the second wavelength are not limited to those indicated above.

The wavelength selection portion 23 includes a first wavelength selecting region 231, a second wavelength selecting region 232, and a third wavelength selecting region 233. It is assumed that the optical axis Oa intersects the first wavelength selecting region 231. The second wavelength selecting region 232 and the third wavelength selecting region 233 are assumed to pass through the red light and block the blue light. The first wavelength selecting region 231 is assumed to pass through the blue light and blocks the red light. That is, the first wavelength selecting region 231 passes through at least light of a first wavelength, and blocks light of a second wavelength different from the first wavelength. The second wavelength selecting region 232 passes through at least light of the second wavelength, and blocks light of the first wavelength.

In the present arrangement, it is assumed that the object S is opaque, and reflects the light at the object surface. However, the object S is not limited to an opaque object, but may be transparent or translucent. In this case, the imaging portion 20 is disposed on a side where the light emitted from the illumination portion has passed through the object S.

Based on the configuration described above, an operating principle of the optical inspection system 1 according to the arrangement will be described.

In FIG. 6, it is assumed that a first object point P1 on the object surface OS is on a standard surface. The standard surface is a mirror surface. The reflected light is a regular reflection, and the BRDF of the reflected light has only specular components in a narrow distribution. On the other hand, a second object point P2 on the object surface OS is assumed to have minute defects having differences in height of about several micrometers. In this case, light reflected on the second object point P2 is scattered and widely spread. That is, the BRDF of the reflected light has a wide distribution in angle. At this time, the BRDF has not only the specular components but also distribution components.

Regarding the illumination light from the illumination portion 30, the light flux emitted from the first light source 311 is considered. An angle formed by the light beam in the light flux and the z-axis (optical axis Oa) is defined as $\alpha$. Similarly, the light flux emitted from the second light source 321 is considered. An angle formed by the light beam in the light flux and the z-axis (optical axis Oa) is defined as $\beta$.

When the illumination light from the illumination portion 30 is reflected on or passed through the object points P1 and P2 in the object S, the imaging portion 20 images the light from the object S on the image sensor 22. As a result, the imaging portion 20 can acquire the image of the object S. That is, the object S is imaged by the imaging portion 20.

The imaging portion 20 focuses light fluxes having intensity distributions indicated by the BRDFs at the object points P1 and P2 on an imaging point on the image sensor 22 to obtain an image. A light beam along a straight line passing through both the imaging point and the object point P1 or P2 is referred to as a main light beam. An angle formed by the main light beam and the light beam in the negative direction along the z-axis is defined as $\theta$.

On the cross-sectional diagram of FIG. 6, a maximum value (positive value) of the incident angles of the illumination lights L1 and L2 is a value of the incident angle of the first illumination light L1 and is defined as amax. If only one illumination light, for example, only the first illumination light L1, is present, the range of the imageable inclination angle $\Theta$ is smaller than the imageable range realized by using the two illumination lights L1 and L2 described above. Thus, with the configuration including the at least two illumination lights L1 and L2, the optical apparatus 10 of the present arrangement is advantageous in that the range of the inclination angle at which the imaging portion 20 can acquire an image is increased.

In the cross section of the optical apparatus 10 shown in FIG. 6, the first illumination light L1 and the second illumination light L2 are fan-shaped light beams having various incident directions. That is, all incident light beams of the illumination lights L1 and L2 of irradiation angles from $\beta$min to amax can be radiated onto the object S. Therefore, all incident light beams of irradiation angles from $\beta$min to amax can be incident on desired object points to obtain an image by continuously acquiring images by the imaging portion 20 while the object S is gradually moved in the conveyance direction relative to the imaging portion 20. Thus, the arrangement is advantageous in that incident light in various directions is radiated onto desired object points, and an image can be obtained each time the light is incident. As a result, even if the object surface OS has inclinations and reflected light is directed in various directions, it is possible to radiate light in incident directions that allow reflections in directions toward the imaging portion 20. That is, even if the object surface OS has various inclinations, illumination light in appropriate directions can be radiated to obtain an image by the imaging portion 20.

The BRDF at the object point in the object S varies depending on the incident angle of the illumination light. Details of the condition at the object point can be acknowledged by obtaining the dependency of the BRDF on the incident angle of the illumination light. Since the optical apparatus 10 of the arrangement can obtain BRDFs for various incident angles, it is advantageous in that detailed information on the object point can be acquired.

The wavelength selection portion 23 includes two or more wavelength selecting regions 231, 232, and 233.

The reflected light from the first object point P1 has a narrow distribution in angle in accordance with a first BRDF. Therefore, the reflected light reaches only the first wavelength selecting region 231 of the wavelength selection portion 23, and the blue light is received by the image sensor 22. On the other hand, the reflected light from the second object point P2 has a wider distribution in angle in accordance with a second BRDF. Therefore, the reflected light reaches all the wavelength selecting regions of the wavelength selection portion 23, namely, the first wavelength selecting region 231, the second wavelength selecting region 232, and the third wavelength selection portion 233, and the blue light and the red light are received by the image sensor 22.

The image sensor 22 in the imaging portion 20 can identify the blue light and the red light in each pixel. Accordingly, in the step of evaluating the object surface OS shown in FIG. 5 (step S23), the controller 100 acquires information on the object S based on the color (hue) of the image obtained by the imaging portion 20. Therefore, the controller 100 is advantageous in that it can identify a difference in BRDF based on the colors (hues). By identifying a difference in BRDF, the controller 100 can determine whether the object surface OS is a standard surface or has minute defects. Therefore, the optical inspection system 1 of the present arrangement is advantageous in that minute defects can be inspected.

As described above, the present arrangement can image an object surface OS having various inclinations. On inclined surfaces having various inclinations, the number of light beams that are passed through the wavelength selecting regions 231, 232, and 233 of the wavelength selection portion 23 vary in accordance with the broadening in the BRDF. That is, the color acquired by the imaging portion 20 varies in accordance with the broadening in the BRDF. Therefore, the present arrangement is advantageous in that minute defects can be inspected on an object surface having various inclinations.

The present arrangement provides the optical apparatus 10 configured to image an object surface OS of an object S (a flat surface and an inclined surface having an appropriate inclination), the optical inspection system 1 configured to optically inspect an object S using the image acquired by the optical apparatus 10, and the method for imaging an object surface OS (a flat surface and an inclined surface having an appropriate inclination).

In the present arrangement, an example is described in which the optical apparatus 10 is conveyed, while the object S is not conveyed. It is possible that the object S may be conveyed, while the imaging portion 20 and the illumination portion 30 of the optical apparatus 10 are not moved. Alternatively, it is possible that the object S may be conveyed in an x-axis direction, while the imaging portion 20 and the illumination portion 30 of the optical apparatus 10 are moved in a -x-axis direction.

(Third Arrangement)

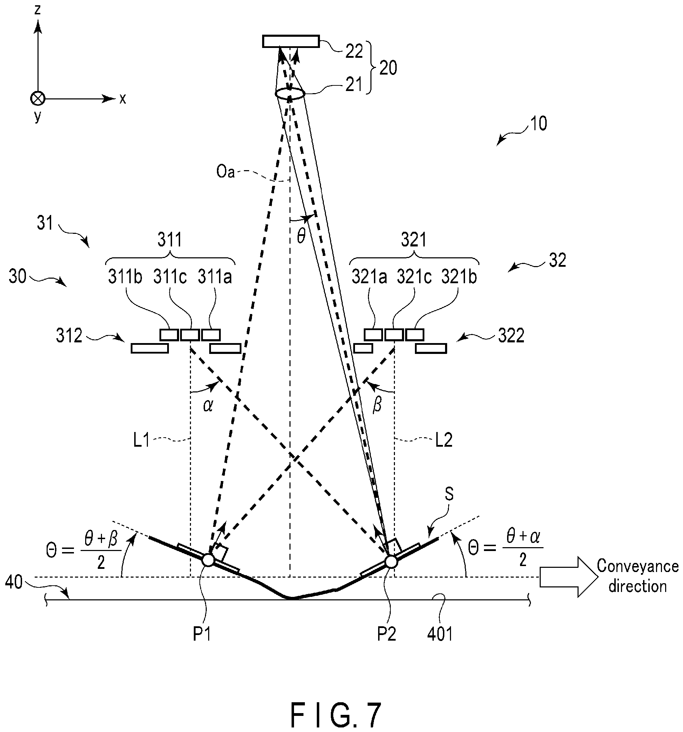

An optical apparatus (optical inspection device) 10 of an optical inspection system 1 according to a third arrangement will be described with reference to FIG. 7. The optical inspection system 1 of the third arrangement is a modification of the optical inspection system 1 of the first and second arrangements. The same members or members having the same functions as those described above for the first and second arrangements are denoted by the same reference numerals as much as possible, and detailed descriptions thereof will be omitted.

FIG. 7 is a schematic cross-sectional diagram showing the optical apparatus 10 in the optical inspection system 1 according to the third arrangement. It is assumed that the cross-sectional diagram shows a z-x plane.

The optical apparatus 10 of the present arrangement includes an imaging portion 20 and an illumination portion 30 including two illuminating portions. Specifically, the illumination portion 30 includes a first illuminating portion 31 and a second illuminating portion 32. The optical apparatus 10 also includes a conveyance portion 40 configured to convey, that is, to move an object S and the imaging portion 20 relative to each other. The conveyance direction may be any direction. In the present arrangement, it is assumed that the object S is conveyed in a positive direction along the x-axis. However, the conveyance may be performed by any means as long as the relative position of the imaging portion 20 and the object S is changed. The conveyance by such means as mentioned above is collectively referred to as conveyance.

In this arrangement, six light sources 311a to 311c and 321a to 321c are used.

The first light source 311 of the first illuminating portion 31 includes a light emitting portion including a 1a-th light source element 311a, a 1b-th light source element 311b, and a 1c-th light source element 311c. The 1a-th light source element 311a, the 1b-th light source element 311b, and the 1c-th light source element 311c of the first light source 311 respectively emit blue light, red light, and green light. A peak wavelength of the blue light is assumed to be 450 nm, which is referred to as a first wavelength. A peak wavelength of the red light is assumed to be 650 nm, which is referred to as a second wavelength. A peak wavelength of the green light is assumed to be 550 nm, which is referred to as a third wavelength. That is, the 1a-th light source element 311a, the 1b-th light source element 311b, and the 1c-th light source element 311c of the light emitting portion of the first light source 311 emit light of mutually different wavelength spectra.

The second light source 321 of the second illuminating portion 32 includes a light emitting portion including a 2a-th light source element 321a, a 2b-th light source element 321b, and a 2c-th light source element 321c. The 2a-th light source element 321a, the 2b-th light source element 321b, and the 2c-th light source element 321c of the second light source 321 respectively emit blue light, red light, and green light. The peak wavelengths of the blue light, the red light, and the green light of the second light source 321 are the same as those of the first light source 311. That is, the 2a-th light source element 321a, the 2b-th light source element 321b, and the 2c-th light source element 321c of the light emitting portion of the second light source 321 emit light of mutually different wavelength spectra.

The 1a-th light source element 311a of the first light source 311 and the 2a-th light source element 321a of the second light source 321 are located at an equal distance to the imaging optical axis Oa on the z-x plane. The 1b-th light source element 311b of the first light source 311 and the 2b-th light source element 321b of the second light source 321 are located at an equal distance to the imaging optical axis Oa on the z-x plane. The 1c-th light source element 311c of the first light source 311 and the 2c-th light source element 321c of the second light source 321 are located at an equal distance to the imaging optical axis Oa on the z-x plane. The same applies to not only the cross section (plane S1) shown in FIG. 7 but also the plane S2 shown in FIG. 3. Thus, the light emitting portion of the first light source 311 and the light emitting portion of the second light source 321 are disposed at positions mirror-symmetric to each other with respect to the optical axis Oa of the imaging portion 20. Not only the positions but also the directions of light emission of the light sources 311 and 321 are preferably mirror-symmetric to each other with respect to the imaging optical axis Oa.

The image sensor 22 has one or more pixels, and each pixel is configured to receive light beams of at least two different wavelengths, namely, a light beam of a first wavelength and a light beam of a second wavelength. A plane including the image sensor 22 is referred to as an imaging plane of the imaging optical element 21. The image sensor 22 may be an area sensor or may be a line sensor. The area sensor includes pixels arrayed in an area on one plane. The line sensor includes pixels arrayed in a line. The pixels of the image sensor 22 may have three color channels of R, G, and B, respectively. In other words, the image sensor 22 may be configured to receive light in independent color channels. However, the color channels of the image sensor 22 need not be completely independent; substantially, the different color channels may be slightly sensitive for the same wavelength. In this arrangement, the image sensor 22 has at least three channels of R, B, and G. That is, the image sensor 22 can disperse red light (R), blue light (B), and green light (G).

Based on the configuration described above, an operating principle of the optical inspection system 1 according to the arrangement will be described.

In FIG. 7, similarly to FIG. 6, a first object point P1 on the object surface OS is assumed to be on a standard surface. The standard surface is a mirror surface. The reflected light is a regular reflection, and the BRDF of the reflected light has only specular components in a narrow distribution. On the other hand, it is assumed that a second object point P2 on the object surface OS has minute defects having differences in height of about several micrometers, similarly to FIG. 6. In this case, light reflected on the second object point P2 is scattered and widely spread. That is, the BRDF of the reflected light has a wide distribution in angle. At this time, the BRDF has not only the specular components but also distribution components.

The reflected light from the first object point P1 has a narrow distribution in angle in accordance with a first BRDF. Therefore, the reflected light, all of the blue light, the red light, and the green light, from the first object point P1 passes through the imaging optical element (imaging lens) 21. Accordingly, when the reflected light reaches the image sensor 22 of the imaging portion 20, the image sensor 22 receives all of the blue light, the red light, and the green light. On the other hand, the reflected light from the second object point P2 has a wider distribution in angle in accordance with a second BRDF. Therefore, when the reflected light from the second object point P2 reaches the image sensor 22 of the imaging portion 20, the green light in a central portion (center) in the x-axis direction of the light emitting portion of the first light source 311 or the green light in a central portion (center) in the x-axis direction of the light emitting portion of the second light source 321 received by the image sensor 22 is more intense as compared to the blue light and the red light. This is because light passed through the light source element 311a (blue light), the light source element 311b (red light) around the light source element 311c (green light) of the light emitting portion of the first light source 311 and the light source element 321a (blue light), and the light source element 321b (red light) around the light source element 321c (green light) of the light emitting portion of the second light source 321, is liable to deviate from the imaging optical element (imaging lens) 21 as the BRDF broadens.

The image sensor 22 not only can disperse the blue light, the red light, and the green light at each of the pixels, but also can acquire a pixel value of the pixel. The ratio of the pixel values of the light (for example, the ratio of the pixel value of the green light to the pixel value of the blue or red light) that is acquired at imaging points in the image sensor 22 with respect to the first object point P1 and that has a narrow distribution in angle in accordance with the first BRDF is different from the ratio of the pixel values of the light (for example, the ratio of the pixel value of the green light to the pixel value of the blue or red light) that is acquired at imaging points in the image sensor 22 with respect to the second object point P2 and that has a wider distribution in angle in accordance with the second BRDF. For example, assuming the ratio of the pixel value of the green light to that of the blue or red light, the second BRDF is greater than the first BRDF. Therefore, in the evaluation of the object surface OS shown in FIG. 5 (step S23), the controller 100 can obtain an image in the imaging portion 20, and can identify the difference in BRDF based on the relationship between the pixel values, such as the ratio of the pixel values in the respective pixels, from the image acquired from the imaging portion 20. If the controller 100 identifies a difference in BRDF, it can determine whether the object surface OS is a standard surface or has minute defects. Therefore, the optical inspection system 1 of the present arrangement is advantageous in that minute defects can be inspected.

The image sensor 22 of the imaging portion 20 can identify (disperse) the blue light, the red light, and the green light in each of the pixels. Therefore, the image obtained by the imaging portion 20 includes information on colors (hues). Therefore, in the evaluation of the object surface OS shown in FIG. 5 (step S23), the controller 100 can obtain an image in the imaging portion 20, and can identify the difference in BRDF from the image acquired from the imaging portion 20. If the controller 100 identifies a difference in BRDF, it can determine whether the object surface OS is a standard surface or has minute defects. Therefore, the optical inspection system 1 of the present arrangement is advantageous in that minute defects can be inspected.

The optical apparatus 10 of the present arrangement can image an object surface OS having various inclinations as described above, using the illuminating portions of the illumination portion 30 located to face each other with the imaging optical axis Oa interposed between the at least two light sources.

The present arrangement provides the optical apparatus 10 configured to image an object surface OS of an object S (a flat surface and an inclined surface having an appropriate inclination), the optical inspection system 1 configured to optically inspect an object S using the image acquired by the optical apparatus 10, and the method for imaging an object surface OS (a flat surface and an inclined surface having an appropriate inclination).

(Modification)

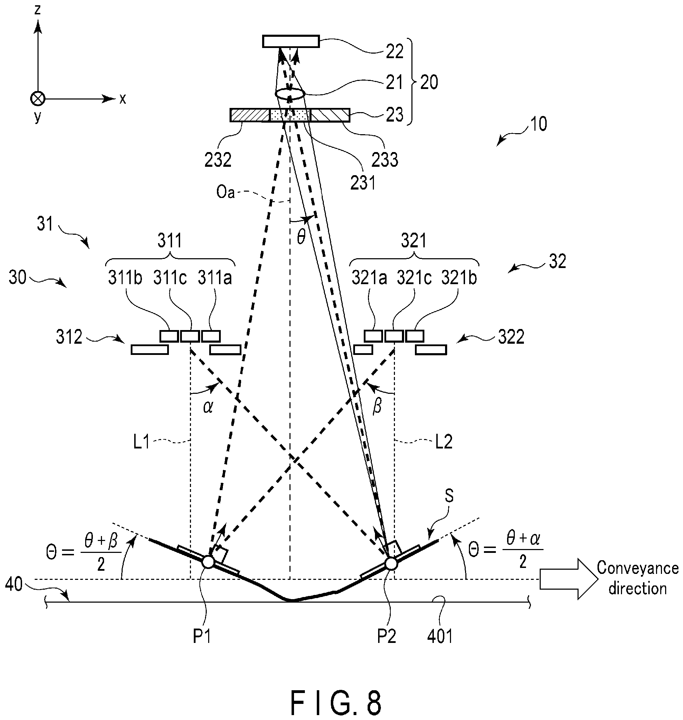

FIG. 8 shows an optical apparatus 10 according to a modification of the third arrangement. As shown in FIG. 8, the imaging portion 20 of the optical apparatus 10 shown in FIG. 7 may include the wavelength selection portion 23 of the second arrangement described above.

For example, the wavelength selection portion 23 includes a first wavelength selecting region 231, a second wavelength selecting region 232, and a third wavelength selecting region 233. It is assumed that the optical axis Oa intersects the first wavelength selecting region 231. In the present arrangement, the first wavelength selecting region 231 is configured to pass through the green light and block the red and blue light. The second wavelength selecting region 232 is configured to pass through the blue light and block the red and green light. The third wavelength selecting region 233 is configured to pass through the red light and block the blue and green light.

The reflected light from the first object point P1 has a narrow distribution in angle in accordance with a first BRDF. Therefore, the reflected light reaches only the first wavelength selecting region 231 of the wavelength selection portion 23, and the green light is received by the image sensor 22. On the other hand, the reflected light from the second object point P2 has a wider distribution in angle in accordance with a second BRDF. Therefore, the reflected light reaches all the wavelength selecting regions of the wavelength selection portion 23, namely, the first wavelength selecting region 231, the second wavelength selecting region 232, and the third wavelength selection portion 233, and the green light, the blue light, and the red light are received by the image sensor 22.

In this case, the optical apparatus 10 according to the modification is advantageous in that more detailed control depending on identification by color can be performed.

On flat surfaces and/or inclined surfaces having various inclinations (curved surfaces), the number of light beams that are passed through the wavelength selecting regions 231, 232, and 233 of the wavelength selection portion 23 vary in accordance with the broadening in the BRDF. That is, the color of light incident on the image sensor 22 varies in accordance with the broadening in the BRDF. Therefore, the controller 100 is advantageous in that minute defects can be inspected on an object surface having various inclinations based on information on the color of the incident light.

At least one of the arrangements described above provides the optical apparatus 10 configured to image an object surface OS of an object S (a flat surface and an inclined surface having an appropriate inclination), the optical inspection system 1 configured to optically inspect an object S using the image acquired by the optical apparatus 10, and the method for imaging an object surface OS (a flat surface and an inclined surface having an appropriate inclination).

While certain arrangements have been described, these arrangements have been presented by way of example only, and are not intended to limit the scope of the inventions. Indeed, the apparatuses, the systems and the methods described herein may be embodied in a variety of other forms; furthermore various omissions, substitutions and changes in the form of the apparatuses, the systems and the methods described herein may be made.

**Claims**

1. An optical apparatus comprising:

   at least two light sources;
   illumination opening portions configured to partially block light emitted from the at least two light sources, respectively, to form illumination light; and
   an imaging portion configured to image an object using the illumination light,
   the at least two light sources being disposed at positions facing each other with an optical axis of the imaging portion interposed between the at least two light sources,
   the illumination light from the at least two light sources being formed to spread like a fan shape toward the object respectively by the illumination opening portions, the fan shape being defined on a reference plane including the optical axis of the imaging portion and on another plane parallel to the reference plane.

2. The optical apparatus according to claim 1, further comprising:
   a conveyance portion configured to change a relative position of the object and the imaging portion, a conveyance direction of the conveyance portion being along the reference plane.

3. The optical apparatus according to claim 1 or 2, wherein
   the illumination opening portions have an equal size and an equal shape on the reference plane including the optical axis of the imaging portion and on said another plane parallel to the reference plane.

4. The optical apparatus according to claim 2, wherein
   the illumination opening portions each include a slit having an equal width on the reference plane including the conveyance direction of the conveyance portion and on said another plane parallel to the reference plane.

5. The optical apparatus according to any one of claims 1 to 4, wherein

   first illumination light is emitted from a first light source of the at least two light sources and spreads like a fan shape via a corresponding one of the illumination opening portions, the first illumination light and the optical axis forming an angle $\alpha$ on the reference plane,
   second illumination light is emitted from a second light source of the at least two light sources and spreads like a fan shape via a corresponding one of the illumination opening portions, the second light source facing the first light source with the optical axis interposed between the first light source and the second light source, the second illumination light and the optical axis forming an angle $\beta$ on the reference plane,
   a main light beam along a straight line passing through both an object point on the object and an imaging point on an image sensor in the imaging portion and the optical axis form an angle $\theta$ on the reference plane,
   in a case where reflection of the first illumination light at an object surface of the object is regular reflection, an inclination angle $\Theta$ of the object that is configured to be imaged by the imaging portion using the first illumination light on the reference plane is

   $$\Theta \;=\; (\theta + \alpha)/2,$$

   and
   in a case where reflection of the second illumination light from the second light source at the object surface is regular reflection, an inclination angle $\Theta$ of the object that is configured to be imaged by the imaging portion using the second illumination light on the reference plane is

   $$\Theta \;=\; (\theta + \beta)/2.$$

6. The optical apparatus according to claim 5, wherein,

   on the reference plane, a range of the inclination angle $\Theta$ of the object that is configured to be imaged by the image sensor of the imaging portion using both the first illumination light and the second illumination light is
   wider than a range of the inclination angle $\Theta$ of the object that is configured to be imaged using only the first illumination light, and

wider than a range of the inclination angle Θ of the object that is configured to be imaged using only the second illumination light, or
wherein
on the reference plane, in a case where a maximum value of an incident angle of the first illumination light is amax and a minimum value of an incident angle of the second illumination light is βmin, a range of the inclination angle Θ of the object that is configured to be imaged by the image sensor of the imaging portion is

$$\beta min/2 \leq \Theta - \theta/2 \leq \alpha max/2.$$

7. The optical apparatus according to any one of claims 1 to 6, wherein

at least some of the light sources respectively include light emitting portions that are configured to emit mutually different wavelength spectra on the reference plane,
the mutually different wavelength spectra include at least one of a first wavelength or a second wavelength different from the first wavelength, and
the imaging portion is configured to disperse the first wavelength and the second wavelength.

8. The optical apparatus according to claim 7, wherein the light emitting portions of the light sources are disposed at positions mirror-symmetric to each other with respect to the optical axis of the imaging portion.

9. The optical apparatus according to any one of claims 1 to 8, wherein

the imaging portion includes a wavelength selection portion that includes
a first wavelength selecting region configured to pass through at least a first wavelength and block a second wavelength different from the first wavelength, and
a second wavelength selecting region configured to pass through at least the second wavelength and block the first wavelength.

10. An optical inspection system comprising:
a controller configured to control at least one of the imaging portion, the light sources, or the conveyance portion of the optical apparatus according to claim 2.

11. An optical inspection system comprising:

a controller configured to control at least one of the imaging portion or the light sources of the optical apparatus according to any one of claims 1 to 9,

the controller being configured to acquire information on the object based on an image imaged by the imaging portion.

12. The optical inspection system according to claim 10 or 11, wherein

the light sources are configured to emit light having at least two different wavelengths,
the imaging portion is configured to disperse the at least two different wavelengths, and
the controller is configured to acquire the information on the object based on a hue of the image imaged by the imaging portion.

13. A method for imaging an object comprising:

radiating illumination light emitted from at least two light sources disposed at positions facing each other with an optical axis of an imaging portion interposed between the at least two light sources to spread the illumination light like a fan shape toward an object from the at least two light sources on a reference plane including the optical axis of the imaging portion and on another plane parallel to the reference plane; and
imaging the object by the imaging portion to acquire an image of a surface of the object.

14. The method according to claim 13, wherein

first illumination light is emitted from a first light source of the at least two light sources and spreads like a fan shape via a first illumination opening portion, the first illumination light and the optical axis forming an angle α on the reference plane,
second illumination light is emitted from a second light source of the at least two light sources and spreads like a fan shape via a second illumination opening portion, the second illumination light and the optical axis forming an angle β on the reference plane,
a main light beam along a straight line passing through both an object point on the object and an imaging point on an image sensor of the imaging portion and the optical axis form an angle θ on the reference plane,
the imaging the object includes:

in a case where reflection of the first illumination light from the first light source at an object surface of the object is regular reflection, imaging an inclination angle Θ = (θ+α)/2 of the object by the imaging portion using the first illumination light on the reference plane, and
in a case where reflection of the second illumination light from the second light source at the object surface is regular reflection, imaging an inclination angle $\Theta = (\theta + \beta)/2$ of the object by the imaging portion using the second illumination light on the reference plane.

15. The method according to claim 13 or 14, wherein the radiating illumination light toward the object includes radiating light from the at least two light sources from positions that are mirror symmetric to each other with respect to the optical axis of the imaging portion to illuminate the object.

**FIG.1**

$$\Theta = \frac{\theta + \beta}{2} \qquad \Theta = \frac{\theta + \alpha}{2}$$

Conveyance direction

F I G. 2

F I G. 3

Start

Drive conveyance portion — S1

Perform optical inspection process — S2

Has object passed? — S3

No

Yes

End

F I G. 4

Perform optical inspection process — S2

Drive illumination section — S21

Acquire information on object surface — S22

Evaluate object surface — S23

Return

# F I G. 5

F I G. 6

F I G. 7

$$\Theta = \frac{\theta + \beta}{2} \qquad \Theta = \frac{\theta + \alpha}{2}$$

F I G. 8

Europäisches Patentamt

European Patent Office

Office européen des brevets

# EUROPEAN SEARCH REPORT

**Application Number**

EP 24 18 0153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 092508 A (WIT CO LTD) 16 May 2013 (2013-05-16) | 1-11, 13-15 | INV. G01N21/88 |
| Y | * paragraphs [0013] - [0043]; figures 2,4,5 * | 2,12 | |
| Y | US 2021/131961 A1 (OHNO HIROSHI [JP] ET AL) 6 May 2021 (2021-05-06) * paragraphs [0023] - [0030]; figure 1 * | 7,8,12 | |
| X | JP S62 229051 A (TOSHIBA CORP) 7 October 1987 (1987-10-07) | 1-4, 9-11,13, 15 | |
| Y | * paragraph [0001]; figures 1,2 * | 2,7,8 | |

**TECHNICAL FIELDS SEARCHED (IPC)**

G01N

The present search report has been drawn up for all claims

| Place of search | Date of completion of the search | Examiner |
|---|---|---|
| Munich | 5 November 2024 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0153

05-11-2024

| Patent document cited in search report | Publication date | Patent family member(s) | | Publication date |
|---|---|---|---|---|
| JP 2013092508 A | 16-05-2013 | CN | 103718027 A | 09-04-2014 |
|  |  | JP | 5427222 B2 | 26-02-2014 |
|  |  | JP | 2013092508 A | 16-05-2013 |
|  |  | WO | 2013061927 A1 | 02-05-2013 |
| US 2021131961 A1 | 06-05-2021 | JP | 7191801 B2 | 19-12-2022 |
|  |  | JP | 2021076423 A | 20-05-2021 |
|  |  | US | 2021131961 A1 | 06-05-2021 |
| JP S62229051 A | 07-10-1987 | NONE | | |

EPO FORM P0459